# FASCICULE DE BREVET EUROPEEN

(11) **EP 3 935 421 B1**
(45) Date de publication et mention de la délivrance du brevet: **14.02.2024**
(21) Numéro de dépôt: 20715277.8
(22) Date de dépôt: 04.03.2020
(51) Int. Cl.: G02B 1/118, G02B 1/14, G02B 1/18

(54) **ELÉMENT OPTIQUE EN TRANSMISSION, PRÉSENTANT UNE SURFACE NANOSTRUCTURÉE SUPER-HYDROPHOBE POSSÉDANT UNE PROPRIÉTÉ ANTIREFLET ET RECOUVERTE D'UN DÉPÔT CONFORME EN COUCHE MINCE À GRANDE DURETÉ**
OPTISCHES ÜBERTRAGUNGSELEMENT, DAS EINE SUPERHYDROPHOBE NANOSTRUKTURIERTE OBERFLÄCHE MIT EINER ANTIREFLEKTIERENDEN EIGENSCHAFT AUFWEIST UND MIT EINER NACHGIEBIGEN HOCHDICHTEN DÜNNSCHICHT BEDECKT IST
OPTICAL TRANSMISSION ELEMENT, HAVING A SUPER-HYDROPHOBIC NANOSTRUCTURED SURFACE HAVING AN ANTI-REFLECTIVE PROPERTY AND COVERED WITH A COMPLIANT HIGH-DENSITY THIN FILM DEPOSIT

(30) Priorité: 07.03.2019 FR 1902313
(43) Date de publication de la demande: 12.01.2022
(73) Titulaire: THALES, 92190 Meudon (FR)
(72) Inventeur: AUBRY, Raphaël, 91767 PALAISEAU Cedex (FR); LEHOUCQ, Gaëlle, 91767 PALAISEAU Cedex (FR); GUILLEMET, Raphaël, 91767 PALAISEAU Cedex (FR); CHOLET, Julie, 91767 PALAISEAU Cedex (FR); MARTINS, José-Paolo, 91767 PALAISEAU Cedex (FR); LEE BOUHOURS, Mane-Si-Laure, 91767 PALAISEAU Cedex (FR); DELBOULBE, Anne, 91767 PALAISEAU Cedex (FR)
(74) Mandataire: Atout PI Laplace
(86) Numéro de dépôt international: PCT/EP2020/055608
(87) Numéro de publication internationale: WO 2020/178304

(56) Documents cités:
- WO-A1-2008/104150
- US-A1- 2017 082 783
- MILLER A J ET AL: "Diamond coatings for IR window applications", DIAMOND AND RELATED MATERIALS, ELSEVIER SCIENCE PUBLISHERS, AMSTERDAM, NL, vol. 6, no. 2-4, 1 mars 1997 (1997-03-01), pages 386-389, XP004161018, ISSN: 0925-9635, DOI: 10.1016/S0925-9635(96)00728-5
- "CHAPTER 14: Diamond-Like Carbon (DLC)" In: "Handbook of carbon, graphite, diamond and fullerenes : properties, processing and applications", 1 janvier 1993 (1993-01-01), William Andrew Publishing/Noyes, Park Ridge, NJ , US, XP055108907, ISBN: 978-0-8155-1339-1 pages 337-355, le document en entier

## Description

L'invention porte sur un élément optique en transmission, présentant au moins une surface nanostructurée super-hydrophobe et ayant une propriété antireflet recouverte d'un dépôt conforme en couche mince à grande dureté, ainsi que sur un procédé de fabrication d'un tel élément.

Dans de nombreuses applications, notamment en optique il est souhaitable de réaliser des éléments optiques présentant une surface hydrophobe ou superhydrophobe pour éviter l'accrochage de gouttes d'eau à leur surface et ainsi en faciliter l'utilisation et le nettoyage. Il est connu de déposer sur l'élément optique lisse un revêtement hydrophobe également lisse, rendant ainsi l'élément moins salissant et en facilitant le nettoyage lorsqu'il est mouillé. De manière générale, ces revêtements hydrophobes comprennent des composés fluorés tels que des fluorosilanes et des fluorosilazanes. Ces revêtements hydrophobes non texturés (surface lisse) permettent d'obtenir des angles de contact avec l'eau limités, ne dépassant pas 115° environ ce qui peut être insuffisant dans certaines applications. On appelle une surface hydrophobe lorsqu'elle présente un angle de contact avec l'eau supérieur à 90° et on appelle une surface superhydrophobe lorsqu'elle présente un angle de contact avec l'eau supérieur à 120° de préférence 130° à 160° ou plus. Les surfaces hydrophobes et superhydrophobes sont autonettoyantes, faciles à nettoyer, anti-traces de doigts et antibactériennes. Il est connu qu'une surface lisse hydrophobe peut être rendue superhydrophobe grâce à l'utilisation de structures de taille micronique ou sub-micronique combinée avec une chimie de surface (silanisation). Ces structures sont appelées SWS, pour « sub-wavelength structures » en anglais, quand elles sont de tailles inférieures à la longueur d'onde d'utilisation du composant optique. La structuration de la surface doit être assez fine pour fournir un effet superhydrophobe. La rugosité ou la structuration de la surface a pour effet un piégeage d'air dans la structure, et une goutte d'eau repose alors sur une surface composite faite de solide et d'air. Cet effet, couramment appelé effet « fakir » permet d'atteindre des angles de contact élevés (~160°) et une hystérésis de l'angle de contact assez faible (inférieure à 30°). De plus, ces SWS peuvent être utilisées pour donner des propriétés antireflets aux éléments optiques pour lesquels elles sont dessinées. Habituellement, les éléments optiques tels que des lentilles ou des dispositifs d'affichages sont traités par des revêtements antireflets mono- ou multicouches qui permettent d'éviter les pertes optiques dues aux réflexions. Cependant, ces revêtements possèdent de nombreux désavantages : des plages restreintes de longueurs d'ondes d'utilisation et d'angle d'incidence, d'expansion thermique et de tenue au flux laser. Les SWS utilisés comme solution antireflet permettent de surmonter la plupart de ces problèmes.

Il est connu d'utiliser des nanostructures SWS périodiques pour conférer des propriétés superhydrophobes (SH) et antiflectives (AR) à un verre transparent dans le visible (Leem, Jung Woo, Yunhae Yeh, and Jae Su Yu. "Enhanced transmittance and hydrophilicity of nanostructured glass substrates with antireflective properties using disordered gold nanopatterns." Optics express 20.4 (2012): 4056-4066). Il est connu de nanostructurer un élément optique en germanium en utilisant des nanostructures avec un rapport d'aspect élevé pour le rendre superhydrophobe, pour augmenter sa transmission dans l'infrarouge et pour faciliter son utilisation en milieu mouillé ou humide (Boyd, Darryl A., et al. "Periodically patterned germanium surfaces modified to form superhydrophobic, IR-transmissive substrates." Optical Materials Express 6.10 (2016): 3254-3261). Des surfaces optiques utilisant des SWS sont donc des candidats idéaux pour réaliser des hublots de caméra, de jumelles ou de fenêtres antireflets dans des systèmes d'observation en milieux maritimes par exemple. Cependant ces nanostructures sont rapidement dégradées dans des conditions d'utilisation difficiles (pluie, grêle, sablo-érosion...) ce qui limite fortement la durée des propriétés SH et AR de ces éléments optiques dans ces milieux-là.

Bien qu'un effort particulier ait été réalisé pour développer des SWS résistantes (voir Infante, Daniel, et al. "Durable, superhydrophobic, antireflection, and low haze glass surfaces using scalable métal dewetting nanostructuring." Nano Research 6.6 (2013): 429-440), ces dernières restent fragiles et instables mécaniquement. Elles ne résistent pas à des contraintes environnementales difficiles. Cette caractéristique des SWS limite fortement les conditions d'utilisation et/ou la pérennité des propriétés SH et AR des optiques utilisant ces structures. Il n'existe actuellement pas de techniques permettant de protéger efficacement les SWS sur des éléments optiques tout en maintenant leurs propriétés optiques.

L'invention vise à résoudre les problèmes de l'art antérieur et particulièrement à obtenir un composant optique comportant à sa surface des nanostructures résistantes aux conditions sévères et procurant au composant optique des propriétés SH et AR durables.

Les documents WO 2008/104150 A1, US 2017/082783 A1 et "diamond coating for IR window applications" par A.J. Miller et al, Diamond and related materials, Elsevier, 1997 font partie de l'état de la technique de la présente invention.

### RESUME

Ainsi, un objet de l'invention est un élément optique, transparent à une longueur d'onde d'utilisation *λ*, présentant une surface nanostructurée super-hydrophobe et ayant une propriété antireflet, ladite surface comportant un réseau de plots, caractérisé en ce que les plots possèdent une largeur nanométrique, une hauteur *h*, un rapport d'aspect inférieur à 1/2, en ce que le pas p du réseau est tel que *p* < *h* et en ce que l'élément comporte une couche supérieure en alumine d'épaisseur inférieure à *h*/5 qui recouvre sans discontinuité et de manière conforme ladite surface nanostructurée, ladite couche supérieure étant obtenue par une étape de recuit à une température comprise entre 500°C et 1200°C et étant dans un matériau d'une dureté supérieure à la dureté du matériau de ladite surface nanostructurée.

Selon des modes particuliers de l'invention :
- les plots sont des cylindres des cônes ou des cônes tronqués ;
- le réseau de plots est périodique ;
- lequel la couche supérieure est en alumine, de préférence en phase saphir, en DLC ou *ZrO*₂;
- la surface nanostructurée est en germanium et la longueur d'onde d'utilisation est comprise entre 8 et 12 *µm* ;
- les plots possèdent un rapport d'aspect inférieur à 1/10 ;
- l'épaisseur de la couche supérieure est inférieure à *h*/10 ;
- le matériau de la couche supérieur possède une dureté supérieure d'au moins 1,3 unité sur l'échelle de Mohs à la dureté du matériau de la surface nanostructurée.

L'invention a aussi pour objet un procédé de fabrication d'un élément optique selon l'une quelconque des revendications précédentes comprenant les étapes suivantes :
a. nanostructuration du réseau de plots à la surface de l'élément optique
b. déposition par Atomic Layer Depositon (ALD) de la couche supérieure, recouvrant de manière conforme et sans discontinuité la surface nanostructurée.

Selon l'invention :
- le procédé comprend, après l'étape b), une étape de recuit c) de la couche supérieure à une température comprise entre 500°C et 1200°C ; et optionnellement,
- l'étape de nanostructuration a) comporte 3 sous étapes :
   i. placer un masque dur lithographié sur la surface à nanostructurer
   ii. graver par des gravures plasma, ioniques, chimiques ou des combinaisons de ces techniques le réseau de plots sur ladite surface à nanostructurer
   iii. retirer le masque dur.

### DESCRIPTION DES DESSINS

D'autres caractéristiques, détails et avantages de l'invention ressortiront à la lecture de la description faite en référence aux dessins annexés donnés à titre d'exemple et qui représentent, respectivement :
[Figure 1] un schéma d'un procédé de fabrication d'un élément optique, transparent à une longueur d'onde d'utilisation ou à une gamme de longueur d'onde, présentant une surface nanostructurée super-hydrophobe et ayant une propriété antireflet selon un mode de réalisation de l'invention.
[Figure 2], un spectre de diffractométrie des rayons-X (ou XRD en anglais pour X-Ray Diffraction) d'une couche d'AlO3 non structurée.
[Figure 3], trois images MEB (pour Microscope Electronique à Balayage) d'un élément optique à différentes étapes du procédé de fabrication de la figure 1.
[Figure 4], deux mesures de dureté par nano-indentation de matériaux différents utilisés dans le procédé de fabrication de la figure 1.

### DESCRIPTION DETAILLEE

Sur les figures, les éléments identiques sont repérés par les mêmes références.

Par réseau de plots, on entend le motif ou l'arrangement spatial des plots sur la surface nanostructurée. Ce motif n'est pas nécessairement périodique.

Par réseau « périodique » de plots, on entend des plots qui se répètent avec un pas fixe à ±10%.

Par « pas » de réseau de plots dans le cas où le réseau n'est pas périodique, on entend la distance minimale entre le centre d'un plot quelconque du réseau et le centre de son plus proche voisin.

Par dimension « nanométrique » d'un objet en entend une dimension maximale strictement inférieure à 7.5 *µm*.

Par « vertical », on entend une direction perpendiculaire à la surface.

Par « rapport d'aspect » d'un objet on entend le rapport entre sa largeur et sa hauteur. Par largeur, on entend la plus grande dimension dans le plan tangent à la surface et par hauteur on entend la plus grande dimension perpendiculaire à la tangente à la surface.

Par « transparent » on entend ici une transmission supérieure à 50%, préférentiellement 75% et encore préférentiellement 95 % à une longueur d'onde ou sur une gamme de longueur d'onde d'illumination

Afin de surmonter le problème de la fragilité des nanostructures conférant des propriétés SH et AR à la surface de composants optiques, l'invention propose de recouvrir ces nanostructures d'une fine couche conforme présentant une dureté importante. Il est connu de protéger des composants optiques nanostructurés en les recouvrant de matériaux « durs » comme du DLC (pour Diamond-Like Carbon en anglais) par exemple, déposé par techniques CVD ou PVD. Le DLC est davantage déposé sur des surfaces planes. Le DLC présente à lui seul des propriétés hydrophobes. Le DLC est un matériau d'une dureté élevée (-25 Gpa) et qui possède de plus un caractère hydrophobe modulable selon les conditions de dépôt. Cependant, il est difficile avec un dépôt par PECVD d'obtenir un profil conforme sur des surfaces nanostructurées présentant un rapport d'aspect élevé tel que celui utilisé pour donner des propriétés SH et AR. Or, le maintien de la forme des nanostructures est essentiel pour conserver les spécifications optiques. La conformité et la faible épaisseur de la couche recouvrant les nanostructures est donc primordiale. On rappelle que la dureté d'un matériau est définie par la résistance qu'oppose la surface dudit matériau à la pénétration d'un corps plus dur.

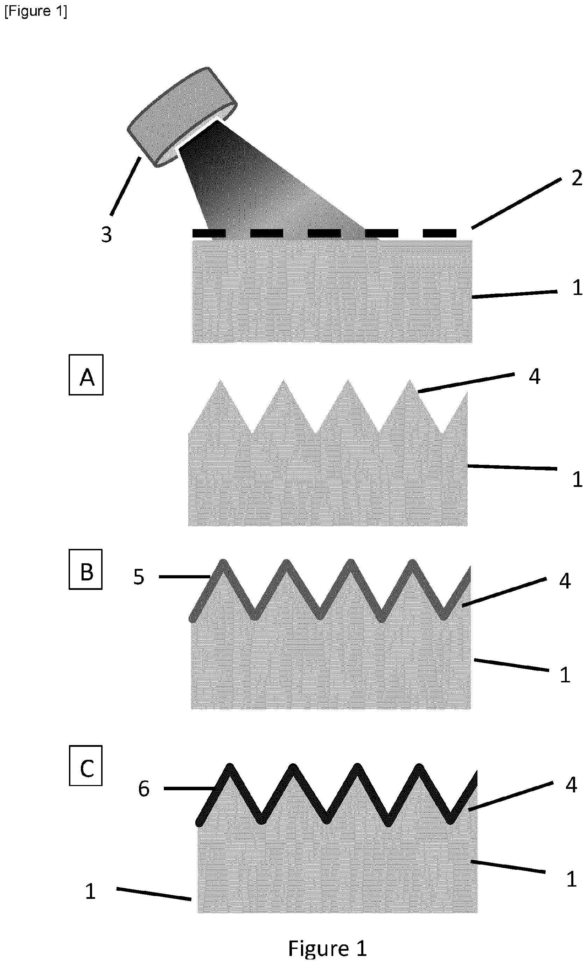

La figure 1 présente un schéma du procédé de fabrication d'un élément optique, transparent à au moins une longueur d'onde d'utilisation *λ* et présentant une surface nanostructurée super-hydrophobe et présentant une propriété antireflet selon un mode de réalisation de l'invention. Dans le mode de réalisation de la figure 1, un composant optique (1) est en germanium et la longueur d'onde d'utilisation est comprise entre 8 et 12 *µm.* Pour référence, une couche de 5 *mm* d'épaisseur de germanium possède une transmission d'environ 50% , correspondant à une transmission d'environ 70% par face pour une incidence normale entre 8 et 12 *µm*. C'est un matériau particulièrement utilisé pour réaliser des optiques dans le domaine de l'infrarouge thermique. Le composant optique 1 peut être une fenêtre, une lentille, un hublot ou tout autre élément optique transparent à la longueur d'onde ou dans la gamme de longueurs d'onde d'utilisation La surface à nanostructurer du composant optique (1) peut ne pas être plane, mais être par exemple convexe ou concave. Le procédé de fabrication peut être décomposé en plusieurs étapes.

Dans l'étape A un masque ou film métallique (2) est défini par nano-impression sur le composant optique (1). Dans un autre mode de réalisation le masque est un masque dur obtenu par lithographie (lithographie optique, blocs copolymères ou lithographie colloïdale). Le film métallique ou film dur sert ensuite de masque lors de l'étape de gravure du germanium par des gravures plasma, ioniques, chimiques ou des combinaisons de ces techniques. Dans un mode de réalisation, cette gravure est réalisée à l'aide d'une source plasma ICP (3) (pour Inductive Coupled Plasma) car ce type de source permet de graver des nanostructures avec des rapports d'aspects pouvant aller jusqu'à 1/15 ou moins qui ne sont pas atteignables avec des gravures purement chimiques. En effet, une telle source permet de générer des plasmas de très forte densité permettant de graver des flancs très verticaux. Le processus de gravure est réalisé par gravure réactive ionique profonde (DRIE pour Deep Reactive Ionique Etching en anglais) à l'aide d'une source ICP.

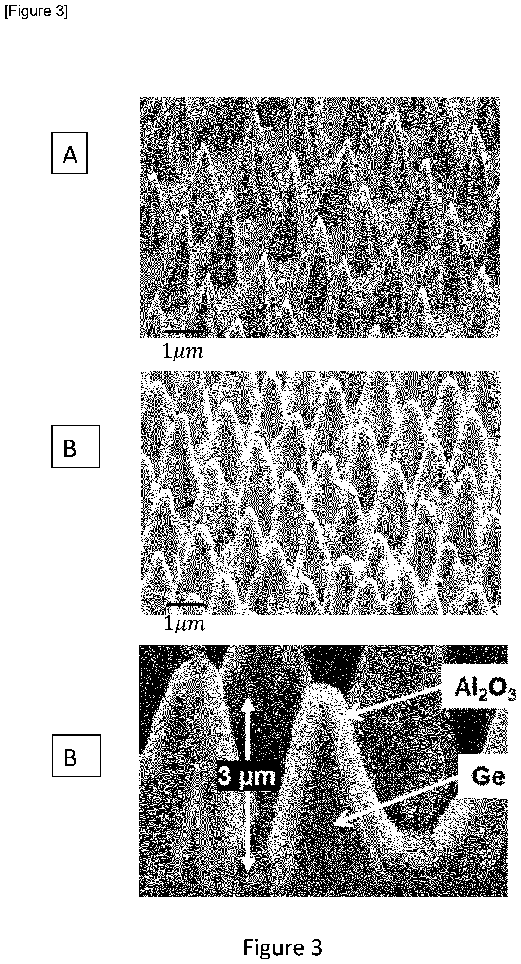

Une fois l'étape de gravure A terminée, le masque est retiré. L'élément optique en germanium (1) possède alors une surface nanostructurée (4). Les paramètres physiques des nanostructures sont détaillés dans la description de la figure 3. Ici nous nous contenterons de préciser que, dans le mode de réalisation de la figure 1, les nanostructures sont des cônes de hauteur *h*, possédant un rapport d'aspect généralement inférieur à 1/2 et qui sont agencées dans un réseau périodique de pas p tel que *p* < *h.*

Ces paramètres physiques sont choisis de manière à ce que la surface nanostructurée (4) confère, à l'élément optique (1), des propriétés AR, à la longueur d'onde d'utilisation *λ*, et aux angles d'incidence d'utilisation et des propriétés SH. L'effet AR provient de la variation progressive de l'indice effectif de réfraction produit par la surface nanostructurée qui agit comme une pseudo-couche d'indice effectif de réfraction variant entre l'indice de l'air et l'indice de réfraction du matériau constituant l'élément optique (1). Concrètement, la hauteur est calculée de façon paramétrique pour maximiser la transmission de la surface en fonction de la gamme de longueurs d'onde et d'angles d'incidence d'utilisation.

Comme mentionné précédemment et en fonction des matériaux utilisés, ces nanostructures peuvent être fragiles et fortement susceptibles de se dégrader dans des conditions environnementales difficiles. Pour pallier ce défaut, l'étape B consiste à déposer une couche supérieure d'un matériau d'une dureté supérieure à la dureté du matériau composant la surface nanostructurée (4), de manière à recouvrir sans discontinuité et de manière conforme ladite surface nanostructurée. Préférentiellement, la couche supérieure possède une dureté supérieure d'au moins 1,3 unité sur l'échelle de Mohs à la dureté du matériau composant la surface nanostructurée. L'épaisseur de la couche supérieure conforme est faible, de manière à conserver les propriétés AR et SH de l'élément optique. En effet, une épaisseur trop importante (ou une couche non conforme) protègerait efficacement les nanostructures mais diminuerait leur rapport d'aspect et donc impacterait négativement l'effet SH et AR. Dans le mode de réalisation de la figure 1, la couche supérieure conforme (5) est en alumine et est déposée par Atomic Layer Déposition (ALD). Cette couche d'alumine est amorphe et elle possède une épaisseur inférieure à *h*/5 et supérieure à *h*/1000. L'alumine (~16GPa) possède une dureté deux fois plus élevée que le germanium (~8GPa) et ainsi permet de protéger la surface nanostructurée (4) et d'augmenter la résistance mécanique de l'élément optique en augmentant sa dureté et sa ténacité. De plus, la couche supérieure conforme agit comme une couche anticorrosion permettant au germanium de supporter des environnements maritimes.

Afin d'augmenter la dureté de l'alumine composant la couche supérieure conforme, le procédé de fabrication de la figure 1 comprend une dernière étape C de recuit thermique de l'élément optique. Dans le mode de réalisation de la figure 1, le recuit est réalisé à une température de 900°C favorisant la cristallisation de l'alumine et l'apparition d'une phase rhomboédrique propre à la phase saphir de l'alumine (6). L'étape C permet d'obtenir l'élément optique final (10) en germanium transparent entre 8 et 12 *µm* et présentant une surface nanostructurée SH et présentant une propriété AR, ces propriétés étant rendues pérennes par le dépôt de la couche supérieure conforme. La dureté de phase saphir de l'alumine est de (~25GPa) ce qui permet une protection plus importante de la couche nanostructurée (4). Selon l'invention, l'étape de recuit thermique de l'alumine est réalisée à une température comprise entre 500°C et 1200°C par des recuits thermiques standards ou rapides (RTA) ou encore des recuits laser. Dans un autre mode de réalisation le matériau constituant la couche supérieure est du DLC ou du ZrO2 par exemple.

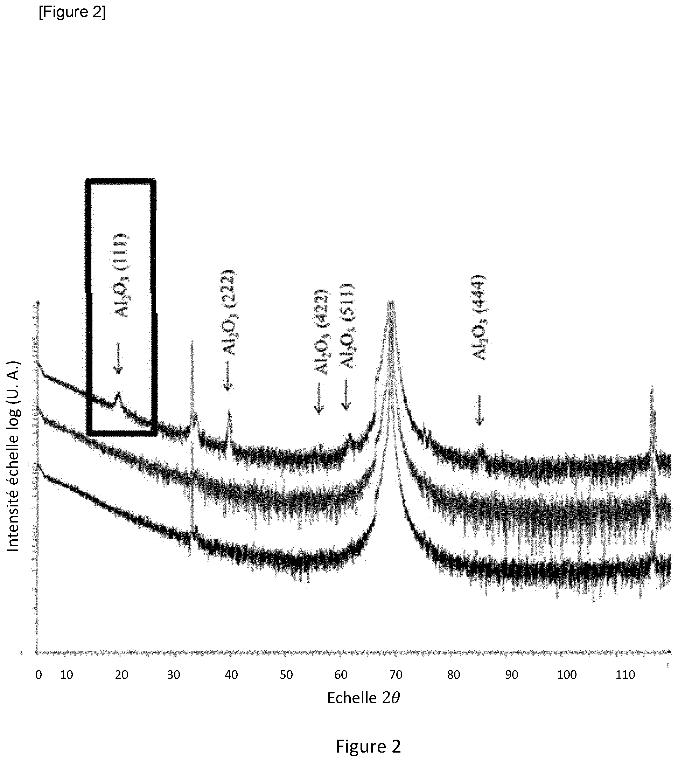

Afin de confirmer l'apparition de la phase saphir de l'alumine, un spectre de diffractométrie par rayons-X (ou XRD pour X- Ray Diffraction en anglais) d'une couche d'alumine déposée sur un substrat de silicium est réalisé. La figure 2 présente le résultat de cette mesure. L'abscisse représente les angles des pics de diffraction associés aux différentes structures cristallines et l'ordonnée correspond au logarithme de l'intensité des différents pics de diffraction. La courbe la plus basse correspond à l'analyse du substrat de silicium seul. La courbe comprise entre les deux courbes correspond au spectre de la couche d'alumine amorphe (5) de 200nm d'épaisseur déposée par ALD sur le substrat de silicium. Enfin, la courbe la plus haute correspond à la spectroscopie de la couche d'alumine (6) après recuit thermique à une température de 900°C. On observe très clairement l'apparition du pic de diffraction sur la courbe la plus haute correspondant à la phase saphir de la couche d'alumine (6) obtenue après recuit thermique (rectangle noir) à 900°C de la couche d'alumine (5) déposée par ALD. Ce pic de diffraction n'est évidemment pas observable lors de l'analyse de la couche d'alumine (5) avant recuit thermique.

La figure 3 regroupe trois images MEB (pour microscope électronique à balayage) de la surface nanostructurée en germanium de l'élément optique obtenu par le procédé de fabrication de la figure 1 à différentes étapes du procédé de fabrication.

L'image A est une image MEB de la surface nanostructurée en germanium après l'étape A du procédé de fabrication similaire à celui de la figure 1. Les nanostructures réalisées par gravure au plasma par source ICP sont des cônes de hauteur *h* = 3.2 *µm* et de rapport d'aspect *R* = *L*/*h* = 1/6, *L* étant la largeur des cônes. Les cônes sont répartis dans un réseau régulier avec un pas de périodicité *p* = 1.6*µm*. Ces paramètres de cônes permettent de conférer des propriétés SH et AR à la surface nanostructurée. De manière générale, un rapport d'aspect inférieur à 1/2 préférentiellement à 1/3 est suffisant pour obtenir des propriétés SH.

Dans un autre mode de réalisation, les nanostructures possèdent une hauteur *h* telle que *h* < *λ*, avec un rapport d'aspect *R* < 1/10 et un pas de réseau *p* tel que *p < h.* Dans un mode de réalisation alternatif, les nanostructures dessinées sur la surface ne sont pas arrangées de façon périodique mais avec un pas de réseau suffisamment petit (ou un réseau suffisamment dense) pour obtenir un effet SH et AR. Dans ce cas, la distance minimale entre un cône quelconque du réseau et son plus proche voisin est comprise entre *h*/3 et 2*h*/3. Les nanostructures peuvent être des plots, des cylindres ou des cônes ou cônes tronqués. On entend ici par cylindre tout solide dont la surface latérale est une surface réglée dont les génératrices sont parallèles, ce qui inclut par exemple les parallélogrammes. On entend par cône tout solide dont la surface latérale est une surface réglée dont les génératrices passent par un même point (le sommet), ce qui inclut par exemple les pyramides.

L'image B1 de la figure 3 montre la surface nanostructurée (4) de l'élément optique, obtenue après l'étape B du procédé de fabrication de la figure 1. Ici, la surface nanostructurée (4) est recouverte sans discontinuité par la couche supérieure conforme d'alumine qui fait 200 nm d'épaisseur par un dépôt de type ALD. Dans un autre mode de réalisation l'épaisseur e de la couche supérieure est inférieure à *h*/5, préférentiellement inférieure à *h*/10 et encore préférentiellement inférieure à *h*/20. L'alumine étant plus dure que le germanium (16 GPa contre 8 GPa), cette couche conforme permet de protéger les nanostructures tout en maintenant les propriétés SH et AR de la surface. Dans un autre mode de réalisation, le dépôt de la couche supérieure conforme est réalisé dans un matériau au moins deux fois, préférentiellement trois fois plus dur que celui composant la surface nanostructurée de l'élément optique (1).

L'image B2 correspond à une vue en coupe de l'image B1 de la figure 3 réalisée à l'aide d'un faisceau d'ion focalisé. Cette coupe permet d'observer la conformité de la couche d'alumine (5) déposé par ALD. Pour rappel, les nanostructures font 3.2 *µm* de hauteur et la couche d'alumine fait 200 *nm* d'épaisseur.

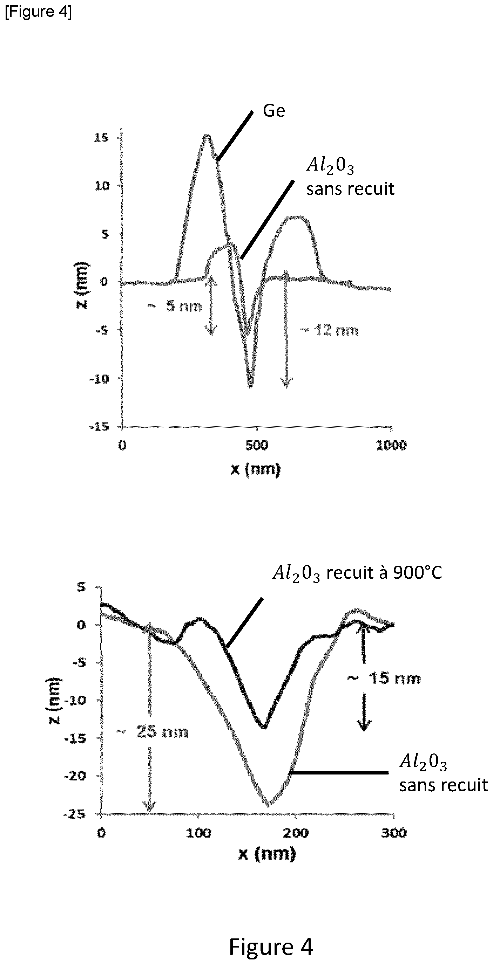

Afin d'étudier de façon plus précise l'effet de la couche supérieure conforme sur la dureté de la surface de l'élément optique (10) des tests de nano-indentation ont été réalisés à l'aide d'un microscope à force atomique (AFM). Le principe consiste à indenter, avec une force définie, le matériau à étudier à l'aide d'une pointe en diamant (d'une dureté comprise entre 70 et 150GPa), puis à mesurer l'empreinte résiduelle avec une pointe présentant un plus petit rayon de courbure. Les matériaux peuvent être ensuite classés selon leur dureté, en fonction de la profondeur de l'indentation résiduelle : plus un matériau est dur, plus la profondeur d'indentation est faible. Les tests ont été effectués sur une surface de silicium et sur une surface de silicium recouverte d'alumine amorphe d'une part avec une force de 350 *µN* et sur une surface de silicium recouverte d'alumine amorphe et sur une surface de silicium recouverte d'alumine recuite à 900°C d'autre part avec une force de 500 *µN.* Les résultats des tests de nano-indentation sont présentés dans la figure 4. Le graphe du haut présente la mesure comparative à l'AFM de l'indentation du silicium et de l'alumine amorphe (sans recuit) déposé sur du silicium par ALD. La profondeur de l'indentation résiduelle avec une force de 350 *µN* est de -12 nm sur le germanium et de ~5 nm sur l'alumine. La profondeur de l'indentation résiduelle avec une force de 500 *µN* est de -25 nm sur l'alumine sans recuit et de -15 nm sur l'alumine après recuit de 900°C.

Ces mesures permettent donc de confirmer que la dureté de l'alumine recuite est supérieure à celle de l'alumine amorphe qui est supérieure à celle du silicium. Ainsi, la couche supérieure conforme en alumine recuite (6) permet une protection supplémentaire aux nanostructures, un fonctionnement de l'élément optique (10) dans des conditions environnementales sévères et une conservation plus longue des propriétés SH et AR.

Dans un autre mode de réalisation les longueurs d'ondes d'utilisation sont comprises dans une gamme de longueur d'onde comprise entre 100 nm et 25 *µm*. Dans un autre mode de réalisation, la surface nanostructurée (4) (et le composant optique (1)) de l'élément optique (10) est en verre d'oxyde, de borosilicate, de silicium, de silice, d'halogénure, de chalcogénure ou de ZnS, ZnSe ou encore polycarbonate. Dans un autre mode de réalisation, la surface nanostructurée est réalisée dans un matériau transparent dans le spectre visible (par exemple en verre BK-7), la longueur d'onde d'utilisation appartenant au spectre visible.

Dans un autre mode de réalisation, non couvert par la présente invention, la couche supérieure conforme (5) peut être réalisée dans tout type de matériau transparent à la longueur d'onde d'utilisation, pouvant être déposé en une couche conforme par ALD et possédant une dureté supérieure à celle du matériau de la surface nanostructurée (4). Préférentiellement, la couche supérieure possède une dureté supérieure d'au moins 1,3 unité sur l'échelle de Mohs à la dureté du matériau de la surface nanostructurée (4).

## Revendications

1. Elément optique (10), transparent à une longueur d'onde d'utilisation *λ*, présentant une surface nanostructurée (4) super-hydrophobe et ayant une propriété antireflet, ladite surface comportant un réseau de plots, **caractérisé en ce que** les plots possèdent une largeur nanométrique, une hauteur *h*, un rapport d'aspect inférieur à 1/2, **en ce que** le pas *p* du réseau est tel que *p < h* et **en ce que** l'élément comporte une couche supérieure (5) en alumine d'épaisseur inférieure à *h*/5 qui recouvre sans discontinuité et de manière conforme ladite surface nanostructurée, ladite couche supérieure (5) étant obtenue par une étape de recuit à une température comprise entre 500°C et 1200°C et étant dans un matériau d'une dureté supérieure à la dureté du matériau de ladite surface nanostructurée.

2. Elément optique selon la revendication 1, dans lequel les plots sont des cylindres des cônes ou des cônes tronqués.

3. Elément optique selon l'une quelconque des revendications précédentes, dans lequel le réseau de plots est périodique.

4. Elément optique selon l'une des revendications précédentes, dans lequel la couche supérieure est en alumine, de préférence en phase saphir, en DLC ou *ZrO*₂*.*

5. Elément optique selon l'une quelconque des revendications précédentes, dans lequel la surface nanostructurée est en germanium et la longueur d'onde d'utilisation est comprise entre 8 et 12 *µm*.

6. Elément optique selon l'une quelconque des revendications précédentes, dans lequel les plots possèdent un rapport d'aspect inférieur à 1/10.

7. Elément optique selon l'une quelconque des revendications précédentes, dans lequel l'épaisseur de la couche supérieure est inférieure à *h*/10.

8. Elément optique selon l'une quelconque des revendications précédentes, dans lequel le matériau de la couche supérieure (5) possède une dureté supérieure d'au moins 1,3 unité sur l'échelle de Mohs à la dureté du matériau de la surface nanostructurée (4).

9. Procédé de fabrication d'un élément optique selon l'une quelconque des revendications précédentes comprenant les étapes suivantes :
a. nanostructuration du réseau de plots à la surface de l'élément optique (A)
b. déposition par Atomic Layer Depositon (ALD) de la couche supérieure, recouvrant de manière conforme et sans discontinuité la surface nanostructurée (B),
c. le recuit de la couche supérieure à une température comprise entre 500°C et 1200°C.

10. Procédé de fabrication d'un élément optique selon la revendication précédente, dans lequel l'étape de nanostructuration a) comporte 3 sous étapes :
i. placer un masque dur lithographié (2) sur la surface à nanostructurer
ii. graver par des gravures plasma, ioniques, chimiques ou des combinaisons de ces techniques le réseau de plots sur ladite surface à nanostructurer
iii. retirer le masque dur.

## Patentansprüche

1. Optisches Element (10), das bei einer Nutzungswellenlänge *λ* transparent ist und eine nanostrukturierte Oberfläche (4) aufweist, die superhydrophob ist und eine Antireflexionseigenschaft aufweist, wobei die Oberfläche ein Netz von Noppen aufweist, **dadurch gekennzeichnet, dass** die Noppen eine nanometrische Breite, eine Höhe h und ein Seitenverhältnis kleiner als 1/2 aufweisen, dass die Teilung *p* des Netzes so ist, dass *p < h,* und dass das Element eine obere Schicht (5) aus Aluminiumoxid mit einer Dicke von weniger als *h*/*5* aufweist, welche die nanostrukturierte Oberfläche ohne Unterbrechung und in konformer Weise bedeckt, wobei die obere Schicht (5) durch einen Glühschritt bei einer Temperatur zwischen 500 °C und 1 200 °C erzielt wird und aus einem Material mit einer Härte besteht, die größer als die Härte des Materials der nanostrukturierten Oberfläche ist.

2. Optisches Element nach Anspruch 1, wobei die Noppen Zylinder der Kegel oder Kegelstümpfe sind.

3. Optisches Element nach einem der vorhergehenden Ansprüche, wobei das Netz von Noppen periodisch ist.

4. Optisches Element nach einem der vorhergehenden Ansprüche, wobei die oberste Schicht aus Aluminiumoxid, vorzugsweise in einer Saphirphase, aus DLC oder *ZrO₂* besteht.

5. Optisches Element nach einem der vorhergehenden Ansprüche, wobei die nanostrukturierte Oberfläche aus Germanium besteht und die Nutzungswellenlänge zwischen 8 und 12 µm liegt.

6. Optisches Element nach einem der vorhergehenden Ansprüche, wobei die Noppen ein Seitenverhältnis von weniger als 1/10 besitzen.

7. Optisches Element nach einem der vorhergehenden Ansprüche, wobei die Dicke der oberen Schicht weniger als *h*/10 beträgt.

8. Optisches Element nach einem der vorhergehenden Ansprüche, wobei das Material der Deckschicht (5) eine Härte aufweist, die um mindestens 1,3 Einheiten auf der Mohs-Skala größer ist als die Härte des Materials der nanostrukturierten Oberfläche (4).

9. Verfahren zur Herstellung eines optischen Elements nach einem der vorhergehenden Ansprüche, die folgenden Schritte umfassend:
a. Nanostrukturierung des Netzes von Noppen auf der Oberfläche des optischen Elements (A)
b. Abscheidung der oberen Schicht durch Atomschichtablagerung (ALD), derart, dass sie konformer Weise und ohne Unterbrechung über der strukturierten Oberfläche (B) liegt,
c. Glühen der oberen Schicht bei einer Temperatur zwischen 500 °C und 1 200 °C.

10. Verfahren zur Herstellung eines optischen Elements nach dem vorhergehenden Anspruch, wobei der Nanostrukturierungsschritt a) 3 Teilschritte umfasst:
i. Platzieren einer lithographierten Hartmaske (2) auf der zu nanostrukturierenden Oberfläche
ii. Ätzen durch Plasma-, Ionen-, chemisches Ätzen oder Kombinationen dieser Techniken des Netzes von Noppen auf der zu nanostrukturierenden Oberfläche
iii. Entfernen der Hartmaske.

## Claims

1. An optical element (10), which is transparent at a wavelength of use *A,* and which has a super-hydrophobic nanostructured surface (4) that has an anti-reflection property, said surface having an array of pads, **characterized in that** the pads have a nanoscale width, a height *h*, an aspect ratio of less than 1/2, **in that** the pitch *p* of the array is such that *p < h* and **in that** the element has a top layer (5) made of alumina having a thickness less than *h*/*5* which covers said nanostructured surface without discontinuity and conformally, said top layer (5) being obtained via a step of annealing at a temperature comprised between 500°C and 1 200°C and being in a material of a hardness greater than the hardness of the material of said nanostructured surface.

2. The optical element according to claim 1, wherein the pads are cylinders of the cones or truncated cones.

3. The optical element according to any one of the preceding claims, wherein the array of pads is periodic.

4. The optical element according to one of the preceding claims, wherein the top layer is made of alumina, preferably in sapphire phase, of DLC or of *ZᵣO₂.*

5. The optical element according to any one of the preceding claims, wherein the nanostructured surface is made of germanium and the wavelength of use is comprised between 8 and 12 µm.

6. The optical element according to any one of the preceding claims, wherein the pads have an aspect ratio of less than 1/10.

7. The optical element according to any one of the preceding claims, wherein the thickness of the top layer is less than *h*/10.

8. The optical element according to any one of the preceding claims, wherein the material of the top layer (5) has a hardness greater by at least 1.3 units on the Mohs scale than the hardness of the material of the nanostructured surface (4).

9. A method of manufacturing an optical element according to any one of the preceding claims, comprising the following steps:
a. nanostructuring the array of pads on the surface of the optical element (A)
b. depositing the top layer by atomic layer deposition (ALD), so as to cover the nanostructured surface (B) conformally and without discontinuity,
c. annealing the top layer at a temperature comprised between 500°C and 1 200°C.

10. Method of manufacturing an optical element according to the preceding claim, wherein the nanostructuring step a) comprises 3 sub-steps:
i. placing a lithographed hard mask (2) on the surface to be nanostructured
ii. etching via plasma, ionic or chemical etches or combinations of these techniques the array of pads on said surface to be nanostructured
iii. removing the hard mask.
